Europäisches Patentamt

European Patent Office

Office européen des brevets

(11) Publication number: **0 298 975**
**B1**

## (12) EUROPEAN PATENT SPECIFICATION

(45) Date of publication of patent specification: **31.10.90**

(21) Application number: **87901759.8**

(22) Date of filing: **13.03.87**

(86) International application number:
**PCT/SE87/00133**

(87) International publication number:
**WO 87/05568 24.09.87 Gazette 87/21**

(51) Int. Cl.⁵: **B 60 P 1/32, B 60 P 3/10**

㊸ A LOADING AND TRANSPORTING ARRANGEMENT.

(30) Priority: **17.03.86 SE 8601236**

(43) Date of publication of application:
**18.01.89 Bulletin 89/03**

(45) Publication of the grant of the patent:
**31.10.90 Bulletin 90/44**

(84) Designated Contracting States:
**AT BE CH DE FR GB IT LI LU NL**

(56) References cited:
**DE-A-2 843 966**
**DE-A-2 948 209**
**US-A-3 056 520**

(73) Proprietor: **NILSSON, Hans**
**Skvaltvägen 4**
**S-794 00 Orsa (SE)**

(72) Inventor: **NILSSON, Hans**
**Skvaltvägen 4**
**S-794 00 Orsa (SE)**

(74) Representative: **Omming, Allan**
**A. OMMING & CO. AB Patentbyra Kungsgatan**
**38**
**S-111 35 Stockholm (SE)**

Courier Press, Leamington Spa, England.

## Description

### Technical Field

The present invention relates to a loading and transporting arrangement, and more particularly to an arrangement with which watercraft can be taken out of the water, placed into the water, and transported by road. The arrangement comprises a wheeled chassis and a ramp which rests on the chassis during transportation of a load and which is intended to support the load and is arranged for movement relative to the chassis to and from a loading position.

### Background prior Art

It is known to lift watercraft from and place watercraft into the water with the aid of a ramp which is supported on rollers and displaceably carried on a truck or lorry and which, during transportation, is placed in a horizontal position and forms a support for the watercraft, or boat, being transported. This known ramp can be moved axially to a downwardly sloping position, in which the boat is either allowed to roll down the ramp gravitationally or, when loading, is hoisted up the ramp with the aid of a winch, c.f. for example US Patent Specification No 3 343 696. One drawback with this known arrangement is that in order to be effective it must be driven relatively close to the shoreline (waters edge) or quay berth at which the boat is to be launched/picked-up, which can be quite problematic when the surrounding surface is soft, marshy, or consists of loose shingle, etc.

Also known to this particular art are arrangements which incorporate rotatable ramps which can be extended in the boat-loading or boat-launching position with the aid of a telescopically extensible frame. These arrangements, however, also have a relatively restricted range, c.f., for instance, Swedish Patent Application No 8 002 397-1, corresponding to German Patent Specification No 2 948 209.

Other arrangements known to the art for the aforedescribed purpose are of relatively complicated construction and are both heavy and difficult to manage in operation. Furthermore, they require a substantially smooth foundation upon which to rest at the shoreline or water edge and at some distance into the water. An example of such an arrangement is described and illustrated in US Patent Specification No 3 357 581. This publication teaches on extensible arrangement comprising a ramp which can be drawn out from a horizontal position on a chassis and rolled into the water, whereupon a boat, or like watercraft, resting on the ramp will float off the ramp and into the water. When launching has properly commenced, there is a danger that the rolling ramp will strike against obstacles that may be present, dig into the sea bed, or the water bottom, etc., thereby rendering work difficult and possibly resulting in impact damage to the boat.

The object of the present invention is to eliminate the aforementioned and other drawbacks and to provide an arrangement which, e.g. will enable boats to be launched into or taken-up from the water at shorelines that are covered with large stones, loose sand, or defined by grassy slopes with high banks, or on quays, or in the region of steps leading down to the water. In this regard less tension is placed on the couplings and power transmissions of towing vehicles, which in many cases can stand vertically at a considerable distance from the waters edge (about 4 m).

### Summary of the Invention

The object is achieved with an arrangement of the aforesaid kind in which, pursuant to the present invention, there is located at one end of the chassis a relatively short, rotatable cradle which is mounted for rotation about a horizontal axis and against which the ramp constantly rests, such as to cause the cradle to rotate about said horizontal axis at a given point in the relative movement between the ramp and the chassis; and in that the arrangement includes at least one separate supporting boom which is intended for pivotal, detachable attachment to the cradle attachment on the chassis when the cradle is rotated out of its given transport position by said ramp, as a result of said relative translatory movement between the chassis and the ramp.

### Brief Description of the Drawing.

The invention will now be described in more detail with reference to the accompanying schematic drawings, in which

Figure 1 illustrates an arrangement according to the invention in its load transporting mode;

Figure 2 illustrates the arrangement of Figure 1 in its off-loading mode; and

Figure 3 is a rear view of the arrangement illustrated in Figure 2.

### Description of a Preferred Embodiment.

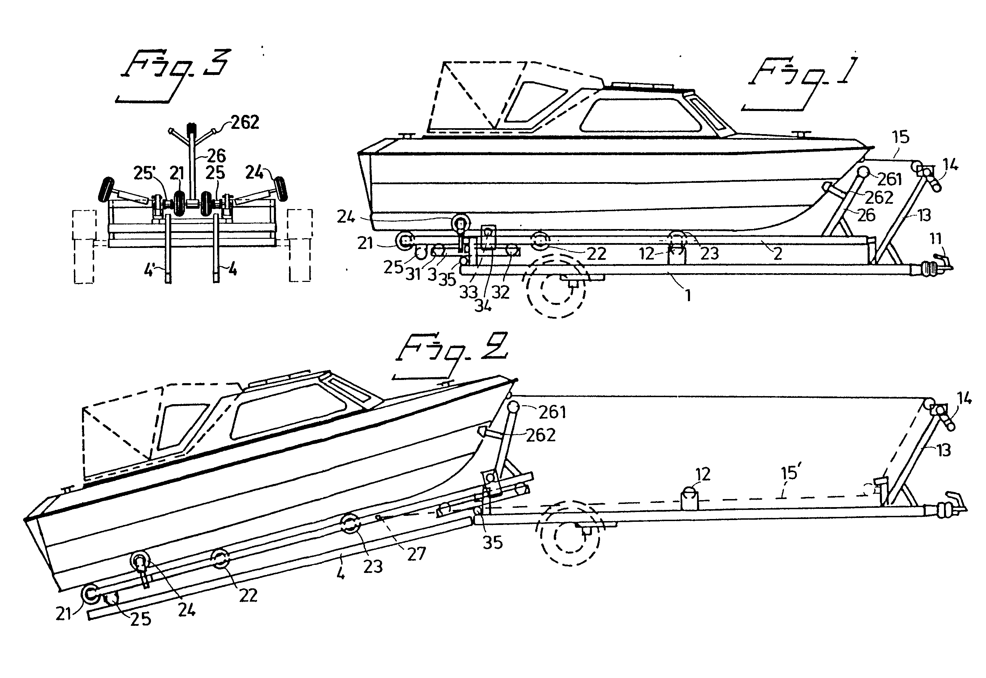

The loading and transporting arrangement according to the illustrated embodiment of Figure 1 comprises a wheeled chassis 1 having rotatably attached at one end thereof a cradle 3 and at the other end thereof a tow-hook 11 for attachment to a tractor or some other towing vehicle.

Supporting wheels (axle) 12 are provided approximately midway along the chassis 1, while at the tow-hook end of the chassis there is provided an elongated holding device 13, the free end of which has mounted thereon a crank or winch arrangement 14 which is equipped with a wire 15 for attachment, e.g., to the stem of a boat.

The cradle 3 is rotatable about a horizontal axle 35 and when in its load-transporting mode will extend in the same direction as the chassis 1, normally horizontally.

The cradle 3 incorporates two pairs of wheels (axles) 31, 32 against which a ramp 2 constantly rests. Arranged on the ramp 2 are three pairs of lowly placed wheels 21, 22, 23 which serve as direct support for eg. the bottom of a boat; a pair of wheels 24 placed at a higher level and supporting the sides of the boat; and a support wheel 25 placed at the left-hand side of the ramp as seen in the drawing.

Arranged at the right-hand end of the ramp is an elongated load (stem) keeper 26 having a height or length substantially equal to that of the holder 13 on the chassis 1. The keeper 26 has provided on its free end a pulley wheel or idling roller 261 for accommodating the wire 15 extended from the winch arrangement on the holder 13.

When the arrangement is in its load-transporting mode, the ramp 2 rests against the wheels (the axles) 31, 32 and 12, and a boat rests on the wheel pairs 21, 22, 23 on the ramp.

In Figure 2 the arrangement illustrated in Figure 1 is complemented with a separate supporting boom 4 which is pivotally connectable (attached) to the cradle attachment on the chassis 1. This supporting boom is intended to support the ramp from beneath when the cradle 3 is rotated about its horizontal axis (anticlockwise in Figure 2) out of its given load-transporting position (horizontal in accordance with Figure 1), as a result of relative movement between the ramp 2 and the chassis 1.

The aforedescribed arrangement operates in the following manner:

With the tow-hook 11 attached, e.g., to the rear end of a car, the chassis 1 stands firm on a horizontal support surface or foundation. The wire 15 is drawn out from the winch arrangement 14 and is passed over the pulley wheel or roller 261 on the ramp 2 and led to a boat located to the left of the ramp, and then attached to the stem of the boat. The boat is winched up onto the ramp wheels 21, 22, 23 with the aid of the crank arrangement 14, and is supported against its sides by the pair of wheels 24. The wheels of the wheel pairs 21, 22, 23 are placed relatively close together and in parallel planes, whereas the wheels of the wheel pair 24 are spaced relatively wide apart and are positioned obliquely so that the axes of the wheels extend in directions which are approximately parallel to the sides of the boat. The boat is winched up onto the ramp 2 until the stem of the boat engages a support 262 on the keeper 26.

Continued winching of the boat causes the ramp and the boat to move as a unit to the right in the Figure, with the wheels 25 of the ramp 2 rolling on the support boom 4. When a certain position is reached (a position of equilibrium), this unit will rest solely on the cradle 3 and immediately thereafter causes the cradle to rotate or tilt clockwise, wherewith the ramp 2 is rotated into abutment with the supporting wheel 12. The ramp and boat are then moved to the right until the ramp strikes the holder 13.

The task of loading the boat onto the vehicle is now completed. A cotter pin or the like used to hold the boom 4 to the chassis 1 is withdrawn and the boom packed away, optionally in the chassis.

When off-loading the boat and placing the same in the water, the boat is transported on the ramp-chassis unit as close as possible to the waters edge or shoreline. The supporting boom 4 is placed over any stones that may be present, or over the edge of the quay, etc., and is fastened by means of the aforesaid cotter pin to the end of the chassis 1. The unit comprising boat and ramp 2 is then rolled towards the water, while keeping the wire 15 tight. Immediately when reaching the aforesaid position of equilibrium on the cradle 3, the cradle is rotated automatically by the axial movement of the ramp, in an anticlockwise direction until the support wheel 25 of the ramp 2 supports against the supporting boom 4, approximately midway therealong, whereupon the boat and ramp together are rolled, with a tight wire 15, to the position illustrated in Figure 2. The boat can then be cast off and moved out into the water.

Due to the mechanical co-operation between the supporting boom 4 - ramp 2 - cradle 3 - chassis 1, movement of the boat from its position in the water to its onloaded transport position is effected very smoothly without any appreciable strain (jolts and jerks) on the boat or transport devices. The presence of the supporting boom 4 enables the arrangement to be used independently of the nature of the ground surface nearest the waters edge. The structural simplicity of the loading and transporting arrangement, coupled with the fact that it comprises only a few components, enables a load to be winched on and off single handed.

Some possible modifications are described below:

For example, the keeper 26 may be made displaceable in the longitudinal direction of the ramp 2, in order to adjust the position of the keeper in relation to the length of the load (the boat), so as to obtain a suitable balance of pressure in relation to the towing vehicle.

Conveniently, there is placed between the right-hand end of the frame 2 and the holder 3, a locking device which, in the illustrated transport mode of the Figure 1 arrangement, holds the load firmly anchored during its transportation. Contributory hereto are two counter-wheels which are attached to symmetrically arranged side-members welded to the cradle 3. These counter-wheels, of which one, 33, is shown in Figure 1 attached for rotation to a side-member 34, press the ramp 2 effectively against the wheel pairs 31, 32 and 12 in the transporting mode of the arrangement. (A corresponding side-member 34' and counterwheel 33' are located on the other side of the cradle 3).

As mentioned in the aforegoing, the cradle 3 is pivotable or rotatable about a horizontal axis. More specifically, the cradle 3 and the chassis 1 have welded thereto a plurality of respective sequentially arranged sleeves through which there is passed a holding shaft 35 (or optionally a plurality of sequentially arranged shafts).

Although mention has been made in the aforegoing to a single supporting boom 4, it will be understood that in some cases the use of two mutually parallel supporting booms may be more suitable. Such an arrangement is illustrated in Figure 3. Naturally, the ramp 2 in this case will have two supporting wheels 25, 25' which co-act supportingly with a respective boom 4, 4' when loading/off-loading.

Depending upon the conditions of the surrounding ground and upon the size and shape of the boat it may be more preferable when loading the boat onto the arrangement to first secure the wire 15 to the stem of the boat, as shown in Figures 1—2, and then when the boat and ramp together have both reached the approximative position illustrated in Figure 2, to attach the wire 15 to a hook 27 on the right-hand end of the ramp 2, as illustrated by the wire shown in broken lines at 15' in Figure 2, and finally, subsequent to clockwise rotation of the cradle 3, to reattach the wire 15 to the stem of the boat, in order to pull the boat and ramp together to their final position on the chassis.

In the embodiment illustrated in Figure 1, the wire 15 extends somewhat over the stem keeper 26 with idler roller or pulley 261. It may be preferable, however, to provide a separate wire-guide for guiding the wire 15 positively against the roller or pulley 261 when the boat begins to leave the ramp 2.

In Figure 2 the supporting boom 4 is shown as a direct continuation of the chassis 1. The boom (or booms 4, 4') may, however, be pivotally mounted to the chassis at a higher level, so as to be in line with the cradle 3, which on occasions will provide a smoother transition when moving the boat onto and off of the arrangement.

When off-loading the boat, it should be anchored firmly to the ramp 2, so as to prevent the boat from leaving the ramp (slide off) prior to the ramp reaching the extreme position illustrated in Figure 2.

When loading a boat onto the chassis, the ramp 2 is preferably locked, with the aid of a cotter pin or like device, against axial movement to the right in Figure 2 as the stem of the boat "climbs" up on the wheel pair 21 of the ramp. This pin is removed when the stem has reached the stem keeper 26 and the boat plus ramp have been winched up onto the chassis, to the right in the Figure. From the aspect of load, a wheel pair 25, 25' is preferably fitted to each of the axles of wheel pairs 21, 22, 23.

## Claim

A loading and transporting arrangement, particularly intended for taking up and launching boats from and into the water and for transporting boats by land, comprising a wheeled chassis (1) and a relatively long load-carrying, e.g. boat-carrying, ramp (2) which is intended to rest against the chassis during transportation, and which is arranged for axial movement relative to the chassis (1) between a loading and an off-loading position, characterized in that the chassis (1) has attached at one end thereof a cradle (3) which is mounted for rotation about a horizontal axis and against which the ramp (2) constantly rests, such as to cause the cradle to rotate about said horizontal axis at a given point in the relative movement between the ramp and the chassis; and in that the arrangement includes at least one separate supporting boom (4) which is intended for pivotal, detachable attachment to the cradle attachment on the chassis (1) when the cradle (3) is rotated out of its given transport position by said ramp, as a result of said relative translatory movement between the chassis and the ramp.

## Patentanspruch

Belade- und Transportvorrichtung insbesondere zum Überführen von Schiffen aus dem Wasser auf das Land, zur Wasserung und zum Transport von Schiffen über Land, mit einem mit Rädern versehenen Chassis (1) und einer relativ langen Lastträgerrampe (2), z.B. einer Schiffsträgerrampe, die während des Transports auf dem Chassis ruht und axial relativ zu dem Chassis (1) zwischen einer Ladestellung und einer Entladestellung beweglich ist, dadurch gekennzeichnet, daß das Chassis (1) an einem Ende eine Wiege (3) trägt, die um eine Horizontalachse kippbar ist und gegen die die Rampe (2) ständig derart anliegt, daß die Wiege veranlaßt wird, sich um die Horizontalachse an einer bestimmten Stelle bei der Relativbewegung zwischen Rampe und Chassis zu verschwenken, und daß die Vorrichtung wenigstens einen separaten Träger (4) aufweist, der schwenkbar gegenüber dem Chassis (1) lösbar an diesem im Bereich der Wiegenlagerung befestigbar ist und die Rampe von unten her abstützt, wenn die Wiege (3) aus ihrer gegebenen Transportstellung heraus durch die Rampe infolge der relativen translatorischen Bewegung zwischen Chassis und Rampe gekippt wird.

## Revendication

Un agencement de chargement et de transport, particulièrement destiné à sortir des bateaux de l'eau et à les lancer dans l'eau ainsi qu'à transporter des bateaux à terre, comprenant un châssis monté sur roues (1) et un plan incliné support de charge relativement long, par exemple un plan incliné porte-bateau (2) qui est destiné à appuyer contrè le chassis pendant le transport, et qui est agencé pour subir un mouvement axial par rapport au châssis (1) entre une position de chargement et de déchargement, caractérisé par le fait que le châssis (1) porte attaché à une extrémité un berceau (3) qui est monté en rotation autour d'un axe horizontal et contre lequel le plan incliné (2) appuie en permanence, de façon à faire tourner le berceau autour dudit axe horizontal en un point donné du mouvement relatif entre le plan incliné et le châssis; et par le fait que l'agencement comprend au moins un bout-dehors de support distinct (4) qui est destiné à être fixé en pivotement de manière amovible à la fixation du berceau sur le châssis (1) quand le berceau (3) est tourné en s'écartant de sa position de transport par ledit plan incliné, du fait du mouvement relatif de translation entre le châssis et le plan incliné.

Fig. 1

Fig. 2

Fig. 3